## Europäisches Patentamt
## European Patent Office
## Office européen des brevets

(19)

(11) Numéro de publication: **0 156 660**
**B1**

(12)

# FASCICULE DE BREVET EUROPÉEN

(45) Date de publication du fascicule du brevet:
**25.11.87**

(51) Int. Cl.⁴: **G 01 V 1/40,** G 01 V 11/00

(21) Numéro de dépôt: **85400184.9**

(22) Date de dépôt: **05.02.85**

(54) **Dispositif de mesures géophysiques dans un puits foré.**

(30) Priorité: **17.02.84 FR 8402395**

(43) Date de publication de la demande:
**02.10.85 Bulletin 85/40**

(45) Mention de la délivrance du brevet:
**25.11.87 Bulletin 87/48**

(84) Etats contractants désignés:
**DE GB NL**

(56) Documents cité:
**DE-A-2 604 063**
**FR-A-1 169 871**
**US-A-2 725 282**
**US-A-3 292 143**

(73) Titulaire: **SOCIETE NATIONALE ELF AQUITAINE (PRODUCTION), Tour Aquitaine, F-92400 Courbevoie (FR)**

(72) Inventeur: **Staron, Philippe, 9 rue François Barbin, F-91540 Mennecy (FR)**
Inventeur: **Gros, Pierre, 9 Avenue Jules Massenet, F-78530 Buc (FR)**

(74) Mandataire: **Levy, David, c/o S.A. Fedit- Loriot 38, avenue Hoche, F-75008 Paris (FR)**

EP 0 156 660 B1

## Description

La présente invention concerne un dispositif de mesures géophysiques dans un puits foré.

Les mesures faites dans un puits foré appartiennent généralement à deux grands types.

Le premier type de mesure est appelé ultrasonique. Une telle mesure est effectuée au moyen d'un outil qui est descendu dans le puits foré, au bout d'un câble. L'outil comprend un ou plusieurs émetteurs et un ou plusieurs recepteurs, en plus des moyens nécessaires au déclenchement des émetteurs aux instants appropriés, et des moyens pour transmettre, à la surface du sol, les signaux reçus par les récepteurs, en vue de leur enregistrement et traitement.

Dans la plupart des cas, les mesures ultrasoniques sont faites pendant le déplacement de l'outil, c'est-à-dire lorsque l'outil est en mouvement dans le puits. La vitesse relativement faible de l'outil dans le puits, quelques mètres par minute, ne provoque pas de bruit parasite sur les récepteurs.

Les récepteurs utilisés sont des hydrophones qui sont en réalité des capteurs sensibles à la pression vibratoire. Les capteurs reçoivent des ondes de compression et, à la rigueur, des ondes parasites issues des ondes de compression et engendrées par les hétérogénéités du milieu. La durée de chaque signal utile reçu sur le capteur, après chaque émission, est de l'ordre de quelques millisecondes, compte tenu de la fréquence des signaux émis.

Comme les mesures sont faites pendant le déplacement de l'outil, le câble de traction de l'outil est donc continuellement sous tension et s'enroule de façon continue autour d'un tambour, par exemple dont la rotation est commandée par des moyens de déplacement disposés en surface.

Il existe de nombreux outils pour la mesure ultrasonique, qui permettent de s'affranchir des ondes se propageant dans la masse même de l'outil, et réaliser des trajets acoustiques possédant une symétrie cylindrique autour de l'axe du puits.

Le deuxième type de mesure concerne un profil sismique vertical, un profil sismique oblique ou encore un profil sismique de puits, ce deuxième type de mesure étant complètement différent du premier type rappelé précédemment pour memoire.

En effet, pour la prospection du pétrole par exemple, il faut déterminer la nature et les caractéristiques des couches souterraines entourant le puits foré. Pour cela, on engendre, à la surface du sol et non dans le puits foré, une énergie sismique au moyen d'une détonation (charge explosive), d'un choc approprié (chute de poids) ou encore d'un vibrateur en contact avec la surface du sol. Cette énergie sismique crée des ondes qui se propagent dans les couches souterraines et qui sont reçues sur des géophones et non plus sur des hydrophones. Les géophones sont, par construction, des "vélocimètres" sensibles à la vitesse vibratoire, et disposés soit sur la surface du sol et alors ils reçoivent les ondes réfléchies et/ou réfractées par les différentes couches souterraines, soit dans le puits foré mais alors ils doivent être impérativement en contact direct avec la paroi du puits foré, contrairement à la mesure ultrasonique ou les capteurs sont généralement dans le fluide emplissant ledit puits foré.

Dans tous les cas, les géophones ou vélocimètres sont sensibles à la vitesse vibratoire et doivent permettre la détermination de tous les types d'ondes sismiques engendrées par l'énergie émise en surface. En effet, le couplage mécanique direct entre les moyens d'émission et la surface du sol, donne naissance à tous les types d'ondes puisque l'énergie sismique émise rencontre forcément des hétérogénéités dans le sous-sol exploré. Dès lors, il n'est plus possible de se contenter de recevoir sur le ou les geophones une onde particulière parmi les autres, ni de s'accommoder d'une grandeur scalaire. Au contraire, il est nécessaire que les géophones reçoivent toutes les ondes, de compression ou transverses, et dans toutes les directions où elles se propagent, de manière à pouvoir, au traitement, distinguer toutes les directions possibles des vitesses vibratoires.

Enfin, par opposition à la mesure ultrasonique, pendant la remontée de l'outil, il faut noter que dans le deuxième type de mesure auquel on se réfère, les mesures sont effectuées, le ou les géophones immobiles par rapport à la paroi et plaqués contre elle pour assurer un couplage satisfaisant.

Le traitement ultérieur des signaux reçus sur les géophones permet d'obtenir des renseignements utiles sur les couches souterraines traversées par les ondes depuis la source sismique jusqu'aux géophones.

Diverses techniques peuvent être mises en oeuvre. On peut disposer des géophones répartis régulièrement ou non, le long du puits foré et traiter les informations sur les différents géophones. On peut également utiliser un outil comprenant un géophone, qu'on arrête, à chaque niveau approprié du puits foré, pendant chaque mesure.

Dans le deuxième type de mesure, la grande difficulté provient de ce qu'on n'a pas réussi, jusqu'à maintenant, à obtenir un couplage satisfaisant du géophone sur la paroi du puits foré.

Une tentative pour surmonter la difficulté a été faite et elle est décrite dans le brevet français N° 1.169.871. Le dispositif de l'art antérieur comprend un outil comportant un élément cylindrique qui sert à maintenir l'ensemble d'un géophone à la hauteur désirée dans le puits foré, et qui empêche l'ensemble du géophone de tourner par rapport à l'outil grâce à une liaison par clavette. L'ensemble des géophones comprend deux lames à ressort en arc, disposées symétriquement de part et d'autre de l'outil qui est centré dans le puits foré, et reliées l'une à l'autre par des pivots montés sur un élément intermédiaire relié au corps de l'outil. Une des lames à ressort est en appui sur la paroi du puits foré tandis que l'autre porte, sensiblement au sommet de sa flèche, un patin, monté à pivot au milieu du ressort, ledit patin étant en contact par la face externe sur la paroi opposée à celle sur laquelle appuie le premier ressort. Un géophone est ensuite fixé sur la face interne du patin et il est relié par un câble conducteur vers l'équipement d'amplification situé à l'intérieur du corps de l'outil.

Un tel outil constitue une amélioration importante par rapport à la technique des géophones disposés sur la surface du sol ou répartis le long de la paroi du puits foré. Mais il ne résout pas entièrement le problème du couplage direct à la paroi du puits foré.

En effet, bien que le patin soit parfaitement rigide et que la tension des ressorts ne lui permette pas de glisser le long de la paroi du puits foré au cours de la mesure, il n'en demeure pas moins que les ondes parasites se propageant dans le corps de l'outil et créées par l'énergie émise se propageant également dans les lames à ressort et le patin, sont reçues par le géophone. Ceci provient de ce que l'outil, le patin et à un degré moindre les ressorts à lames sont rigides.

Un autre inconvénient est que pour une mesure donnée, le géophone est orienté dans une seule direction et ne peut donc détecter qu'un type d'onde.

Un autre inconvénient, le plus grave sans doute, est que le ressort à lame supportant le géophone ne présente qu'un degré de liberté, déterminé dans le sens de la flèche du ressort. La structure du ressort et les tensions d'application développées ne lui permettent pas d'être souple dans toutes les directions. De ce fait, il n'y a pas un découplage effectif entre la masse de l'outil et la masse du géophone et du patin associé, laquelle masse de l'outil, très importante par rapport à celle de l'ensemble géophone, introduit un effet parasite, lequel est d'autant plus important que la liaison du corps de l'outil avec ledit ensemble géophone est rigide.

Il faut également noter que, du fait de la liaison rigide entre la masse de l'outil et le géophone, ce dernier dont la masse est faible par rapport à celle de l'outil, ne peut vibrer utilement à la réception des hautes fréquences du spectre émis; ainsi, ces hautes fréquences se trouvent être éliminées et tout se passe donc comme si le corps de l'outil et les souplesses relatives des parois du puits foré constituaient un filtre pour ces hautes fréquences.

Le dispositif utilisé dans le deuxième type de mesure comprend également des moyens de déplacement de l'outil qui sont reliés à ce dernier, par des moyens de traction et de suspension de l'outil.

Quels que soient ces moyens de traction et de suspension de l'outil, souples ou rigides, constitués par un câble de traction ou par une tige, les mesures sont effectuées les unes après les autres, sur toute la hauteur du puits foré, et de la maniére suivante, par exemple.

On descend l'outil jusqu'à la profondeur ou niveau désiré, puis on met en place ledit outil en l'immobilisant sur les parois du puits par des bras rétractables, après quoi les mesures sont effectuées pour ce niveau considéré.

Les mesures suivantes étant effectuées à un niveau supérieur, il faut remonter l'outil en rabattant les bras rétractables et en actionnant les moyens de traction, puis procéder à une nouvelle mise en place identique à celle mentionnée précédemment.

Il est évident que ces mesures séquentielles impliquent également un fonctionnement séquentiel des moyens de traction et de déplacement qui doivent être arrêtés pendant les mesures et déplacés entre les mesures. Dans le cas du câble de traction, il faut ajouter une opération supplémentaire qui est la remise sous tension dudit câble à la fin de chaque série de mesures car il est relâché pendant toute la durée des mesures de manière à découpler du point de vue sismique l'outil des moyens de déplacement de surface.

Tout ceci entraîne une perte de temps relativement importante ainsi qu'un certain nombre de réglages successifs pour les différents positionnements de l'outil dans le puits foré.

La présente invention concerne plus spécialement le deuxième type de mesures mentionné précédemment, mais peut tout aussi bien être mise en oeuvre dans le premier type de mesures en utilisant des hydrophones à la place des géophones, ou encore être une combinaison des deux types en utilisant des hydrophones et des géophones.

Le présente invention a pour objet un dispositif de mesures géophysiques dans un puits foré du type comprenant un outil de mesure: au moins un transducteur monté sur ledit outil de mésure; des moyens de déplacement de l'outil le long de la paroi du puits; des moyens élastiques monté, sur l'outil, et positionnant le transducteur à proximité de la paroi pendant chaque phase de mesure, caractérisé en ce que l'outil de mesure comprend au moins une bande sans fin dont au moins une partie constitue un support pour ledit transducteur, et des moyens de déroulement en continu de la bande sans fin, lesdits moyens de déroulement coopérant avec des moyens de retenue et d'immobilisation par rapport à ladite paroi, pendant chaque phase de mesure, d'au moins la partie de ladite bande sans fin support de transducteur.

Lorsque les moyens de déplacement sont constamment commandés de manière à permettre un déplacement continu de l'outil de mesure, le découplage, du point de vue sismique, entre les moyens de déplacement et l'outil de mesure, est réalisé car le transducteur est immobile pendant chaque phase de mesure.

Selon une variante de l'invention, le dispositif comprend plusieurs chenilles dont les géophones associés permettent des mesures simultanées sur des portions de paroi qui sont dans des directions opposées.

De même, grâce à la présente invention, on peut réaliser des mesures périphériques dans le puits foré.

Suivant une autre variante de l'invention, les transducteurs dont certains sont constitués par des géophones, sont reliés au corps de l'outil par des organes élastiques souples dans au moins deux directions, l'élasticité desdits organes souples étant au moins égale à l'élasticité la plus forte de la couche souterraine traversée par le puits. De plus, la fréquence de résonance de la masse du ou des géophones avec les moyens souples est au plus égale à la fréquence de résonance de ladite masse du ou des géophones avec ladite élasticité la plus faible.

La liaison du géophone avec le corps de l'outil par des moyens souples dans au moins deux directions permet de découpler presque totalement la masse du corps de l'outil de celle du géophone et, en conséquence, d'éliminer la quasi-totalité des effets parasites introduits par la masse du corps de l'outil dans les mesures. De plus, grâce à une telle liaison élastique le géophone est capable de vibrer dans la direction de la composante de la vitesse vibratoire de l'onde qu'il peut recevoir.

D'autres avantages et caractéristiques ressortiront à la lecture de la description de plusieurs modes de réalisation donnés à titre d'exemples non limitatifs et en référence aux dessins annexés sur lesquels:

- La figure 1, est une vue en coupe schématique d'un puits foré dans lequel on a introduit un outil de mesure, représenté schématiquement avec une partie arrachée, et suivant un premier mode de réalisation de l'invention;

- La figure 2, est une vue en coupe suivant II-II de la figure 1;

- La figure 3, est une vue en perspective d'une portion de chenille utilisée dans l'outil représenté sur la figure 1.

- La figure 4, est une vue partielle d'un outil de mesure dans une partie de puits foré, suivant un deuxième mode de réalisation;

- La figure 5, est une vue en coupe suivant V-V de la figure 4;

- La figure 6, est une vue en perspective partielle de quatres chenilles utilisées dans un troisième mode de réalisation de l'outil selon l'invention;

-La figure 7, est une vue en coupe transversale de l'outil suivant le troisième mode de réalisation.

-La figure 8 est une vue schématique, partielle et en perspective de quatre chenilles utilisées pour des mesures périphériques.

-La figure 9, est une vue partielle d'une partie de chenille sur son chemin de roulement et de guidage.

-La figure 10, est une vue partielle en coupe de la portion de la chenille suivant X-X de la figure 3.

Le dispositif de mesure 1 représenté sur les figures est destiné à être descendu dans un puits foré 2 délimité par la surface du sol 5 et sa paroi 3 sensiblement cylindrique qui peut comprendre ou non des irrégularités 4. Le puits 2 traverse des couches souterraines qui ne sont pas matérialisées sur les dessins et dont on veut connaitre certaines de leurs caractéristiques.

A la surface du sol 5, sont disposés des moyens de commande de déplacement de l'outil 1, ces moyens étant représentés schématiquement sous la forme d'un bloc 6.

Les moyens de commande 6 entraînent, de façon continue, dans l'exemple préféré de l'invention, l'outil de mesure 1 par l'intermédiaire d'un câble de traction 7 qui est guidé par une poulie de renvoi 8.

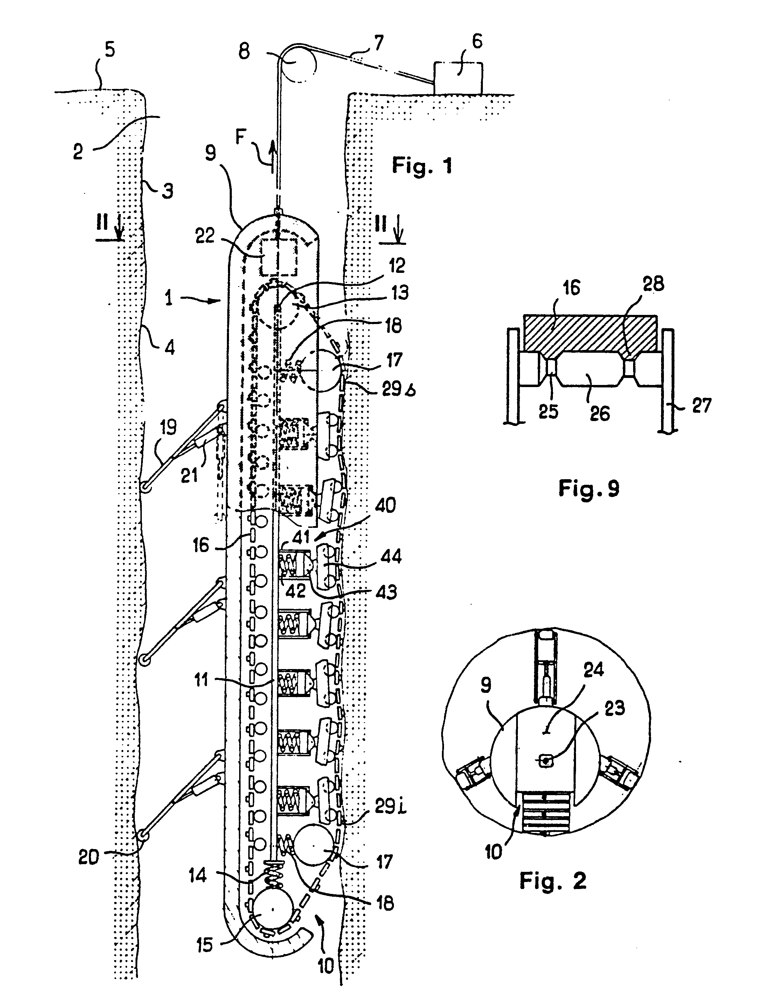

L'outil de mesure comprend (figures 1 et 2) un corps constitué par un carter 9, ouvert sur au moins une de ses faces 10 et suspendu par son extrémité supérieure au câble 7.

A l'intérieur du carter 9 est logée une tige 11 constituant un élément sensiblenent fixe de l'outil et solidaire, par son extrémité supérieure, de l'axe fixe 12 d'un tambour rotatif supérieur 13, l'axe 12 étant solidaire du carter 9. L'extrémité inférieure de la tige 11 constitue un appui pour un ressort 14 dont l'autre extrémité est reliée à un tambour inférieur rotatif 15.

L'outil de mesure 1 est guidé le long de la paroi 3 au moyen de bras rétractables 19 articulés chacun à une de leurs extrémites sur le corps de l'outil et munis à leur autre extrémité, d'une roulette 20 susceptible de rouler sur ladite paroi 3. Chaque bras 19 est commandé par un vérin 21 qui peut amener le bras dans la position déployée ou dans la position repliée, représentée en pointillé sur la figure 1. Les vérins sont alimentés en fluide hydraulique à partir d'une centrale de commande ou boîte de connexion 22 logée dans le corps d'outil.

L'axe vertical 23 de l'outil passe sensiblement par l'axe de la tige 11 et il est décalé latéralement par rapport à l'axe vertical 24 du puits. Les bras rétractables 19 sont, de préférence, disposés à 120° les uns des autres de manière à positionner correctement l'outil de mesure 1 par rapport à la partie de paroi 3 sur laquelle on veut procéder à des mesures (fig. 2).

Une bande sans fin constituée par exemple par une chenille 16 est enroulée autour des tambours 13 et 15 et passe au-dessus des rouleaux tendeurs et de guidage 17, disposés à proximité des tambours 13 et 15 et sollicités dans la direction adéquate par des ressorts 18 reliés à la tige centrale 11.

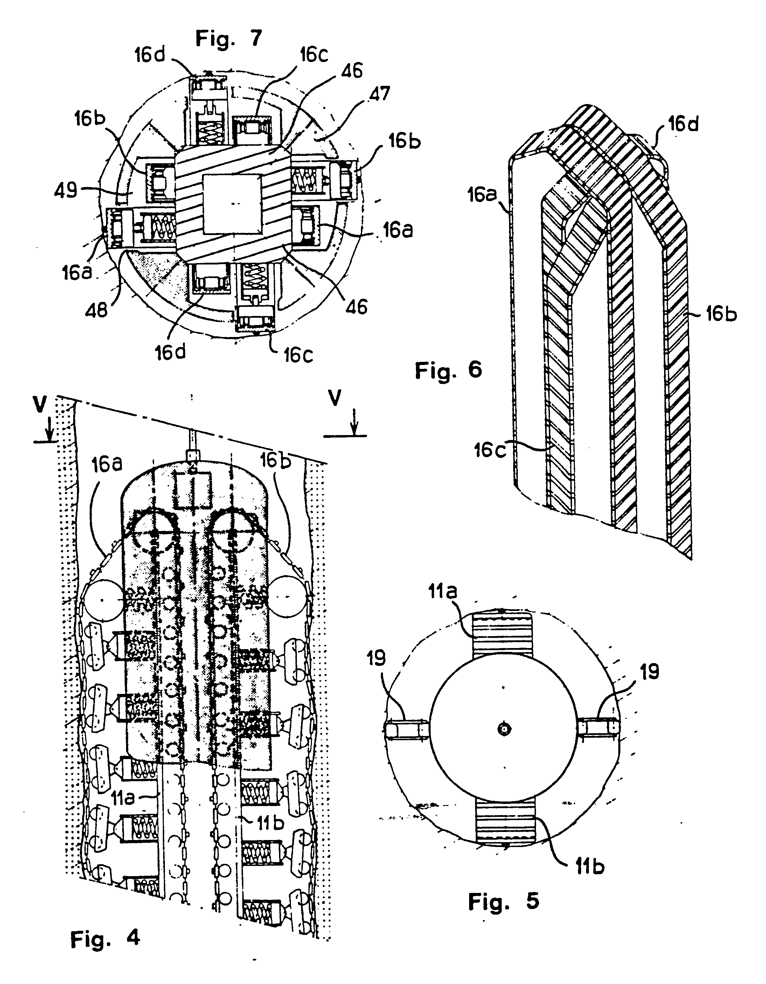

La chenille 16 se déplace sur un chemin de roulement et de guidage délimité par des gorges 25 de galets de roulement 26 dans lesquelles s'engagent des nervures 28 de la chenille 16, et par des cornières 27 solidaires du corps de l'outil comme cela est représenté sur les figures 4 et 9.

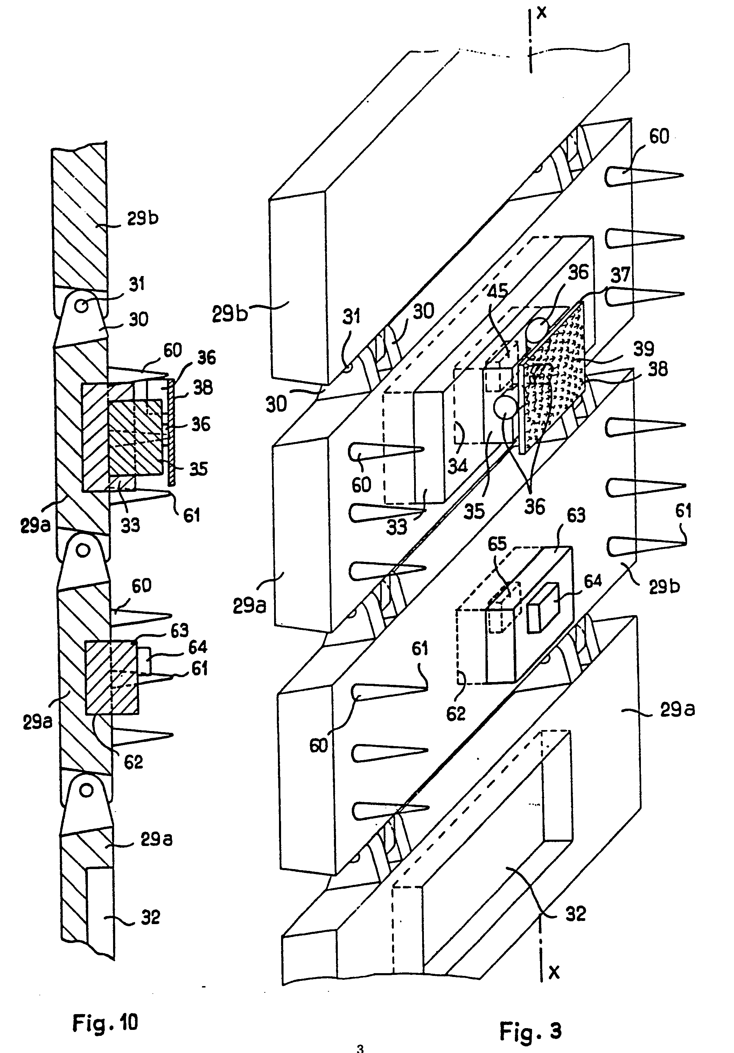

La chenille 16 est constituée figures 3 et 10 par des patins 29a, 29b, articulés les uns sur les autres au moyen d'oreilles d'articulation 30 et de pivots 31. Entre deux patins 29a est inséré un patin 29b de manière à avoir alternativement un patin 29a suivi d'un patin 29b. Dans chaque patin 29a est ménagé un logement borgne 32 de forme quelconque, et de préférence rectangulaire, dans lequel est inséré, à force, une plaque intermédiaire de support 33 dont l'épaisseur est supérieure à la profondeur du logement 32. Dans la plaque intermédiaire de support 33 est également ménagé un logement 34 dans lequel est inséré, également à force, un bloc amortisseur élastique 35. Un ou plusieurs transducteurs tels que des géophones 36 qui sont groupés suivant trois directions différentes, chacun d'eux étant susceptible de vibrer dans une direction préférentielle et de détecter ainsi la composante d'une vibration se propageant dans ladite direction. Suivant le mode de réalisation représenté sur la figure 3 les trois géophones 36 sont orientés suivant trois directions orthogonales et sont montés sur le bloc élastique amortisseur 35 de manière à les découpler mécaniquement de l'outil de mesure 1.

Des moyens de retenue et d'immobilisation dont la fonction sera décrite ultérieurement à propos du fonctionnement de l'outil de mesure, sont montés sur les patins 29a et 29b, de manière à se trouver à proximité de la paroi 3 du puits le long de laquelle est déroulée la chenille 16. Les moyens de retenue et d'immobilisation comportent notamment sur chaque patin 29a, une plaque d'accrochage rigide 37 montée en avant des géophones 36 et dont la surface externe 38, en regard de la paroi 3 comporte des picots d'accrochage 39 ou autres pointes équivalentes, de préférence régulièrement répartis sur toute ladite surface externe 38. La hauteur et la forme des picots 39 sera choisie en fonction de leur pénétration souhaitée dans la paroi 3, et donc en fonction de l'accrochage de la chenille 16 sur ladite paroi 3.

La répartition des groupes de géophones 36 sur toute la longueur de la chenille 16 peut être modifiée et elle dépendra généralement de la partie de paroi 3 à prendre en considération pour les mesures.

Des picots 60 sont également prévus aussi bien sur les patins 29a que sur les patins 29b de manière à renforcer le contact de la portion de chenille sur la paroi du puits foré, et empêcher ainsi un quelconque glissement de ladite portion de chenille sur ladite paroi. Les picots 60 ou autres organes d'accrochage équivalents sont répartis de façon quelconque sur les patins 29a et 29b. Toutefois, leur pointe 61 d'accrochage sont prévues pour se situer dans un plan légèrement en arrière du plan défini par la surface interne de la plaque d'accrochage 37. De cette façon la chenille 16 est maintenue contre la paroi du puits par les surfaces externes 38 des plaques d'accrochage 37 et par les picots 60.

Avec une chenille 16 qui comprend un assez grand nombre de géophones 36, du type décrit ci-dessus, on est toujours assuré qu'au moins plusieurs groupes de géophones 36 procurent des mesures significatives, même lorsque la paroi 3 présente des irrégularités importantes 4.

De manière à permettre une application du plus grand nombre de patins 29a, 29b sur la partie utile de la paroi 3, des moyens d'appui et de positionnement 40 sont incorporés dans l'outil 1. Ces moyens 40 sont montés, régulièrement espacés, sur la tige 11. Chaque élément comprend un tube 41, fixé rigidement à la tige centrale 11, un ressort 42 souple au moins dans deux directions et logé dans le tube 41, ledit ressort 42 étant relié à un organe de poussée 43 qui est articulé à une pièce d'appui 44 qui pivote autour de l'axe d'articulation.

Le fonctionnement du dispositif comportant une chenille 16, décrit en référence aux figures 1 à 3, est le suivant:

Lorsque l'outil de mesure, après avoir été descendu au fond du puits foré 2, est remonté vers la surface 5, l'enroulement du câble 7 exerce une traction sur l'outil de mesure 1. L'enroulement continu du câble 7 produit ainsi une remontée continue de l'outil de mesure 1 et donc un déplacement, dans la direction de la flèche F, de la chenille 16, par l'intermédiaire des éléments fixes de l'outil et notamment du carter 9 et de l'axe 12 qui lui est solidaire. Le déplacement du tambour 13 dans la direction de la flèche F, produit une rotation de la chenille 16. En raison de l'ancrage d'une partie de la chenille 16 sur la paroi 3, le patin situé à la partie supérieure et référencé 29s reste immobile par rapport à ladite paroi jusqu'à ce qu'il vienne occuper la place du patin référencé 29i, après que l'outil de mesure ait ete déplacé d'une distance égale à celle séparant le patin 29s du patin 29i. La durée pendant laquelle chaque patin reste immobile par rapport à la paroi définit une phase de mesure pendant laquelle les géophones 36 logés dans ces patins, également immobiles par rapport à la paroi 3, sont susceptibles de détecter les vibrations se propageant dans les couches souterraines situées autour du puits foré 2.

Des moyens, non représentés, sont prévus sur le rouleau supérieur 17 pour détecter et transmettre en surface, le passage d'au moins du patin supérieur 29s de façon à avoir un positionnement exact de ce patin par rapport au corps de l'outil et, en conséquence, un repérage de la couche d'intérêt.

Dans ce qui précède, on n'a pas fait référence à une émission d'ondes acoustiques capables de produire des vibrations. Une telle émission peut être produite par des moyens qui sont traditionnels et logés par exemple dans le bloc 6, ou autonomes et alors incorporés dans l'outil de mesure 1, au niveau des patins.

Dans le cas d'une source autonome, on ménage dans un patin 29b un logement borgne 62 destiné à recevoir un bloc amortisseur 63 analogue au bloc amortisseur 35 des patins 29a. Une source d'ondes acoustiques 64 est montée sur le bloc amortisseur 63, en lieu et place des géophones 36, de manière à être, comme ces derniers désacouplée élastiquement du corps de l'outil.

Un récepteur de télémesure 65 est associé à la source acoustique 64, et commandé par la boîte de connexion 22. Les moyens de télémesure aptes à permettre la commande de la source 64 par le récepteur de télémesure 65 et la transmission des informations recueillies par les géophones 36, ne seront pas décrits dans le détail car ils sont bien connus des spécialistes.

Sur les patins 29a, on monte également un émetteur de télémesure 45 qui transmet les données recues sur les géophones 36, à la boîte de connexion 22.

De préférence, toutes les commandes nécessaires au fonctionnement des moyens de télémesure 45 et 65 sont groupées dans ladite boîte de connexion 22.

Les différences de longueur de contact de la chenille 16, en raison des irrégularités 4 de la paroi 3, sont compensées dans l'outil grâce au ressort 14.

Ainsi grâce à la présente invention, on peut soit déplacer l'outil de mesure 1 de facon continue tout en avant des géophones 36 immobiles par rapport à la paroi 3 et utiliser ledit outil dans le deuxième type de mesure indiqué dans le préambule, soit déplacer ledit outil de facon discontinue comme cela est réalisé dans le premier type de mesure.

Un autre mode de réalisation de l'outil 1 est représenté sur les figures 4 et 5. L'outil 1 comprend deux chenilles 16a et 16b avec tous leurs accessoires tels que décrits en référence aux figures 1 à 3, qui ne seront pas décrits à nouveau. Un outil à deux chenilles 16a et 16b permet la détection des vibrations sur deux parties de parois opposées. Dans ce mode de réalisation, les bras rétractables 19, non visibles sur la figure 4, se déplacent sur les parties de paroi autres que celles d'appui des chenilles 16a et 16b; la tige centrale 11 est remplacée par deux tiges 11a et 11b, l'une 11a étant affectée à la chenille 16a tandis que l'autre 11b est affectée à la chenille 16b.

Suivant un autre mode de réalisation représenté sur les figures 6 et 7, l'outil comprend quatre chenilles 16a à 16d, couplées deux à deux, les chenilles 16a et 16b étant affectées à deux parties de paroi opposées tandis que les deux autres chenilles 16c et 16d sont affectées aux parties de paroi perpendiculaires aux précédentes. Les quatre chenilles 16a à 16d sont montées autour d'une tige centrale creuse 46, dans laquelle on peut faire passer des câbles ou des conducteurs électriques. Le corps 47 de l'outil 1 comprend des parties ouvertes 48 et des logements borgnes 49 pour le passage des chenilles. De cette manière, les vibrations se propageant dans les quatre parties de paroi correspondant aux chenilles 16a à 16d sont détectées simultanément. Pour des raisons évidentes de fonctionnement les chenilles 16a à 16d ne présentent pas la même longueur, la paire de chenilles intérieures 16c, 16d étant plus courte que la paire de chenilles extérieures 16a, 16b.

Dans ces conditions, la longueur utile de mesure est celle relative à la chenille la plus courte, ladite longueur utile étant la distance séparant le patin 29s du patin 29i représentés sur la figure 1.

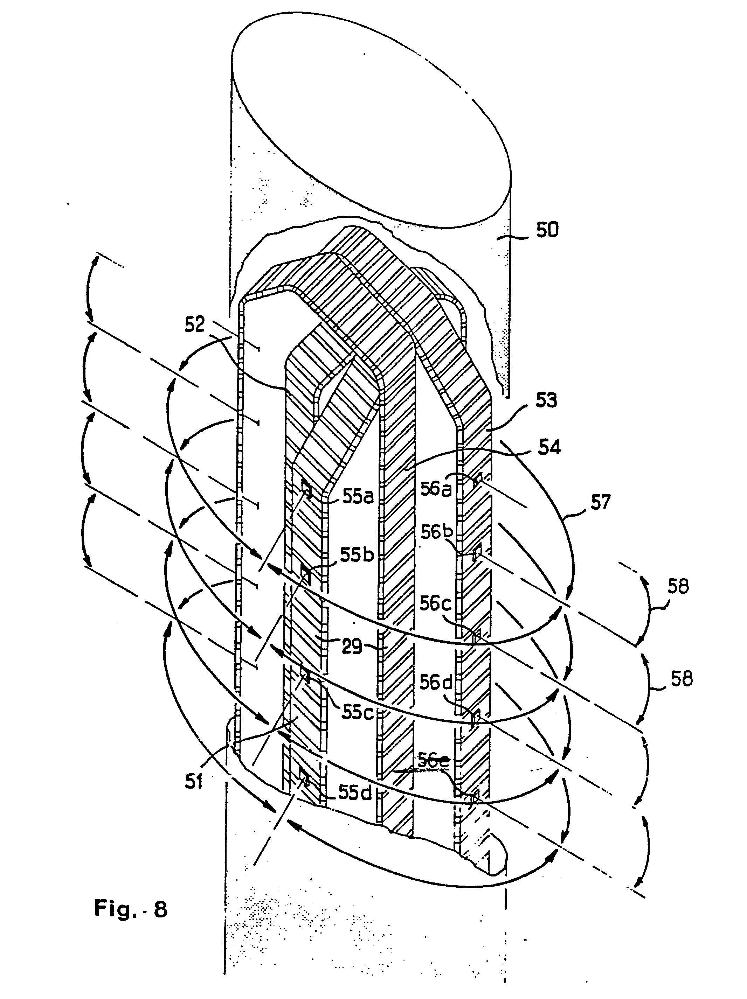

Dans certains cas, des mesures périphériques sont souhaitées. Grâce à la présente invention elles sont possibles, par utilisation d'un outil de mesure à quatre chenilles, comme cela est représenté sur la figure 8.

Sur cette figure schématique, seuls les éléments nécessaires à la compréhension du fonctionnement ont été représentés, étant entendu que les autres éléments nécessaires sont ceux décrits à propos des autres figures.

Le puits foré 2 est représenté par une enveloppe 50 où des parties ont été arrachées pour laisser apparaître quatre chenilles 51 à 54 couplées deux à deux, la paire 51-52 étant logée à l'intérieur de la paire 53-54.

Dans ce mode de réalisation sont prévus des moyens d'émission des ondes acoustiques 55 et de réception 56 des vibrations se propageant dans les couches souterraines entourant le puits foré.

Les émetteurs acoustiques 55, notamment les émetteurs 55a à 55d, sont disposés sur les chenilles 51 et 52, les récepteurs acoustiques ou géophones 56 et notamment les récepteurs 56a à 56e étant disposés sur les chenilles 53 et 54 perpendiculaires aux précédentes, de façon que chaque émetteur 55 soit entre deux récepteurs 56. En outre, les émetteurs 55 et récepteurs 56 associés sont situés dans un même plan horizontal. C'est ainsi qu'en se référant à la figure 8, le deuxième émetteur 55b, compté à partir du haut, est associé au troisième récepteur 56c, toujours compté à partir du haut; les deux autres émetteurs et récepteurs des chenilles 52 et 54, non représentés sur la figure, déterminent avec l'émetteur 55b et le récepteur 56c un plan, délimité sur la figure par une ellipse 57. Les différentes ellipses 57 sont situées à des niveaux différents dans le puits foré 2, la distance séparant deux ellipses consécutives délimitant l'épaisseur de la couche de terrain présentant un intérêt pour la mesure. Les distances sont représentées par des flèches 58 et correspondent à la distance séparant deux émetteurs 55 ou deux récepteurs 56 consécutifs situés dans deux plans d'ellipse 57 consécutifs. Dans l'exemple de la figure 8, la distance, dénommée intertransducteur, et séparant sur une même chenille deux émetteurs ou deux récepteurs consécutifs est égale à la largeur de quatre patins 29, mais elle pourrait être choisie plus grande ou plus petite. L'intertransducteur détermine la différence de longueur entre les chenilles 51 à 54 prises deux à deux. Une solution simple consiste à choisir un intertransducteur, et à déterminer une différence de longueur entre les chenilles qui soit un multiple de cet intertransducteur. De cette façon, les positionnements des émetteurs 55 et des récepteurs 56 ainsi que les mesures effectuées à l'aide de ces émetteurs et récepteurs seront cohérents et donneront d'excellents résultats.

Dans une variante, on peut sur chaque paire de chenilles associées, par exemple 51 et 53, monter les émetteurs et les récepteurs acoustiques en alternance de telle sorte que dans un même plan horizontal, un récepteur de la chenille 51 corresponde à un émetteur de la chenille 53 et inversement.

Dans tout ce qui précède, on a fait mention de moyens de déplacement de l'outil de mesure 1 commandés à partir de la surface 5 du puits foré 2. Bien évidemment, si les dimensions du puits foré ainsi que l'encombrement des équipements introduits dans ledit puits foré le permettaient, on pourrait utiliser des moyens de déplacement de l'outil autonomes en équipant, par exemple, ledit outil d'un moteur qui ferait avancer l'outil de mesure de façon continue ou discontinue, suivant le type de mesures qu'on désire effectuer.

Pour que chacun des géophones 36 puisse vibrer convenablement dans la direction de la composante de la vitesse vibratoire détectée, il faut qu'il soit découplé mécaniquement du corps d'outil 9, 47 qui lui est associé. Or l'élasticité propre $s$ la plus faible de la paroi 3 introduit une liaison élastique sur les géophones 36. Comme l'élasticité S du bloc amortisseur 35 agit sur ces derniers, on a donc un système élastique en équilibre constitué par le corps de l'outil, les bras annexes 19 et les autres organes de l'outil de masse totale M; par l'ensemble formé par les groupes de géophones 36, les plaques d'accrochage 37 et les blocs amortisseurs 35 de masse totale $m$, et par l'élasticité $s$ des roches. Pour obtenir un bon découplage, il est alors nécessaire de déterminer une élasticité S qui doit être d'autant plus grande que la masse M est grande par rapport à la masse m. Les calculs montrent que lorsque S = s, la vitesse vibratoire de chaque ensemble géophone est la moitié de celle des roches. Dans ce cas, il est nécessaire que la fréquence de résonance de la masse M avec l'élasticité S soit égale à celle de la masse m avec l'élasticite s;

L'outil de mesure 1 décrit en référence aux figures 1 à 10 comprend des moyens de retenue et d'immobilisation dont le but est d'immobiliser par rapport à la paroi du puits foré, la portion de chenille comprise entre les patins 29 s et 29i. Bien évidemment, ces moyens pourraient être modifiés et/ou supprimés au moins en partie lorsqu'on change l'orientation de la chenille ou la matière constituant ladite chenille. En effet, dans un puits foré dont l'axe serait horizontal et non plus vertical comme réprésenté sur la figure 1, il est possible de réaliser un outil de mesure dont le poids et/ou les organes d'application seraient tels que les moyens de retenue et d'immobilisation décrits ne seraient plus nécessaires, sous la condition, bien évidemment, que lesdits organes d'application immobiliseraient une portion de la chenille pendant chaque phase de mesure.

De même, lorsqu'on utilise une chenille ou une bande sans fin qui présenterait un coefficient d'adhérence sur la paroi d'un puits horizontal ou vertical tel qu'un glissement de ladite chenille sur ladite paroi ne pourrait se produire pendant chaque phase de mesure, alors les moyens de retenue et d'immobilisation seraient vraisemblablement modifiés de façon importante, voire même supprimés, pour tenir compte des caractéristiques physiques du matériau constituant ladite chenille ou bande sans fin.

Bien entendu, l'invention est susceptible de nombreuses variantes accessibles à l'homme de l'art, suivant les applications envisagées.

**Revendications**

1. Dispositif de mesures géophysiques dans un puits foré, du type comprenant un outil de mesure (1); au moins un transducteur (36) monté sur ledit outil de mesure (1); des moyens de déplacement (7, 8) de l'outil (1) le long de la paroi (3) du puits (2); des moyens élastiques d'appui (42), montés sur l'outil (1) et positionnant le transducteur (36) à proximité de la paroi (3) pendant chaque phase de mesure, caractérisé en ce que l'outil de mesure (1) comprend au moins une bande sans fin (16) dont au moins une partie (29) constitue un support pour ledit transducteur (36), et des moyens de déroulement en continu (7, 8) de la bande (16) sans fin, lesdits moyens de déroulement (7,8) coopérant avec des moyens de retenue et d'immobilisation (39, 60) par rapport à ladite paroi (3), pendant chaque phase de mesure, d'au moins ladite partie (29) de la bande sans fin (16)support de transducteur (36).

2. Dispositif selon la revendication 1 caractérisé en ce que chaque bande sans fin est une chenille (16) de longueur constante constituée par des patins (29a, 29b) distincts et articulés les uns par rapport aux autres, ladite chenille (16) se déplaçant sur un chemin de roulement et de guidage intérieur (25, 27).

3. Dispositif selon la revendication 2, caractérisé en ce qu'il comprend plusieurs transducteurs acoustiques (36) répartis sur toute la longueur de la chenille.

4. Dispositif selon la revendication 3, caractérisé en ce que les transducteurs (36) sont groupés en des groupes comprenant chacun trois transducteurs disposés dans trois directions perpendiculaires.

5. Dispositif selon la revendication 4, caractérisé en ce que chaque groupe de transducteurs est monté en arrière des moyens de retenue et d'immobilisation qui sont constitués au moins par une plaque d'accrochage (37) dont la face externe (38) est en contact avec la paroi (3) du puits en regard, au moyen de picots (39) répartis sur toute la surface de contact de ladite plaque (37).

6. Dispositif selon l'une des revendications 4 à 5, caractérisé en ce que chaque groupe de transducteurs est interposé entre un bloc élastique (35) solidaire du patin support (2a) et la plaque d'accrochage (37).

7. Dispositif selon la revendication 6, caractérisé en ce que le bloc élastique (35) est logé à force dans un logement (34) ménagé dans un organe de support intermédiaire (33) solidaire du patin de support.

8. Dispositif selon l'une des revendications 2 à 7, caractérisé en ce que les moyens élastiques sont constitués par un ressort (42) monté entre un élément (12) sensiblement fixe de l'outil de mesure et une pièce de liaison (43) qui est articulée sur une pièce d'appui (44) susceptible de venir en appui sur des galets (26) du chemin de roulement (25,27) de la chenille.

9. Dispositif selon l'une des revendications 2 à 8 caractérisé en ce que l'outil de mesure comprend un carter (9) ouvert sur au moins la face située en regard du côté de la paroi (3) où sont appliquées les plaques d'accrochage (37), et en ce que l'élément sensiblement fixe de l'outil est constitué par une tige centrale (11) sur laquelle prennent appui lesdits moyens élastiques (42), et deux tambours (13, 15) sur lesquels se déroule la chenille, un desdits tambours (13) étant solidaire par son axe fixe (12) dudit carter.

10. Dispositif selon la revendication 9 caractérisé en ce qu'il comprend des moyens (14) de compensation des variations de tension de la chenille introduites par des irrégularités de la paroi.

11. Dispositif selon l'une des revendications 1 à 10, caractérisé en ce qu'il comprend des bras (19) rétractables de guidage et d'appui de l'outil (1) sur la paroi (3) du puits foré, lesdits bras (19) étant disposés à 120° les une des autres.

12. Dispositif selon l'une des revendications 9 à 11, caractérisé en ce que l'outil (1) présente un axe vertical (23) qui passe sensiblement par l'axe de la tige et qui est décalé latéralement par rapport à l'axe vertical (24) du puits foré.

13. Dispositif selon la revendication 9, caractérisé en ce que le carter (9) est tracté dans le puits par un câble (7) qui est enroulé en continu par les moyens de déplacement.

14. Dispositif selon l'une des revendications 1 à 12, caractérisé en ce qu'il comprend des moyens de transmission (45) de données disponibles sur les transducteurs.

15. Dispositif selon la revendication 14, caractérisé en ce que les moyens (45) de transmission de données comportent des moyens d'émission qui sont logés dans le bloc élastique des transducteurs et des moyens de réception qui sont logés dans une boîte de connexion (22) montée à l'intérieur du carter.

16. Dispositif selon l'une des revendications 2 à 15, caractérisé en ce que l'outil de mesure (1) comprend plusieurs chenilles (16a, 16b) pourvues chacune de plusieurs groupes de transducteurs.

17. Dispositif selon la revendication 16, caractérisé en ce que l'outil de mesure (1) comprend un corps (46) central creux disposé dans une enveloppe de protection (47) dans laquelle sont ménagés des passages (48, 49) pour quartre chenilles, lesdites chenilles se déroulant autour dudit corps central (46) et étant associées deux à deux de manière à permettre des mesures sur quatre portions de paroi situées sensiblement dans quatre directions perpendiculaires.

18. Dispositif selon la revendication 17, caractérisé en ce qu'il comprend des transducteurs acoustiques émetteurs (55a à 55d) et récepteurs (56a à 56e) qui sont répartis sur deux chenilles de longueurs différentes et se déroulant dans deux directions perpendiculaires, les transducteurs récepteurs (56a à 56e) étant montés sur une desdites chenilles tandis que les transducteurs émetteurs (55a à 55d) sont montés sur l'autre chenille, chaque paire d'un émetteur et récepteur associés étant située sensiblement dans un même plan perpendiculaire à l'axe de l'outil, la différence de longueur des deux chenilles associées étant telle qu'elle soit un multiple de la distance séparant deux émetteurs consécutifs.

19. Dispositif selon la revendication 17, caractérisé en ce que chaque chenille comprend des émetteurs acoustiques (55a à 55d) alternant avec des récepteurs acoustiques (56a à 56e) et de telle façon que pour deux chenilles associées et dans un même plan horizontal un émetteur d'une desdites chenilles corresponde à un récepteur de l'autre chenille.

20. Dispositif selon l'une des revendications 2 à 19, caractérisé en ce que chaque chenille (16,16a, 16b) comporte des patins de support (29a) pour des transducteurs récepteurs qui sont constitués par des géophones (36), lesdits patins de support (29a) alternant avec des patins (29b) ne comportant pas de géophones.

**Patentansprüche**

1. Vorrichtung für geophysikalische Messungen in einem Bohrloch, mit einem Meßwerkzeug (1), mindestens einem aan dem Meßwerkzeug (1) befestigten Umformer (36), einer Einrichtung (7,8) zum Verschieben des Werkzeugs entlang der Wandung (3) des Bohrlochs (2) und einer am Werkzeug (1) befestigten elastischen Abstützeinrichtung (42), die während jeder Meßphase den Umformer (36) nahe der Wandung (3) positioniert,
   <u>dadurch gekennzeichnet,</u>
   daß das Meßwerkzeug (1) mindestens ein Endlosband (16) aufweist, von dem wenigstens ein Teil (29) als Support für den Umformer (36) dient, sowie eine Einrichtung (7,8) zum kontinuierlichen Abrollen des Endlosbandes (16), wobei die Abrolleinrichtung (7,8) mit einer gegenüber der Wandung (3) wirksamen Festhalte- und Blockiereinrichtung (39,60) während jeder Meßphase zumindest in dem als Support für den Umformer (36) dienenden Abschnitt (29) des Endlosbandes zusammenwirkt.

2. Vorrichtung nach Anspruch 1, dadurch gekennzeichnet, daß jedes Endlosband eine von getrennten und gelenkig miteinander verbundenen Gliedern gebildete Raupe (16) mit konstanter Länge ist, die sich auf einer inneren Roll- und Führungsbahn bewegt.

3. Vorrichtung nach Anspruch 2, dadurch gekennzeichnet, daß mehrere akustische Umformer (36) vorgesehen sind, die über die gesamte Länge der Raupe verteilt sind.

4. Vorrichtung nach Anspruch 3, dadurch gekennzeichnet, daß die Umformer (36) zu Gruppen von je drei Umformern zusammengefaßt sind, die in drei zueinander senkrechten Richtungen angeordnet sind.

5. Vorrichtung nach Anspruch 4, dadurch gekennzeichnet, daß jede Umformergruppe hinter der Festhalte- und Blockiereinrichtung angeordnet ist, die wenigstens eine Kupplungsplatte (37) aufweist, deren Außenseite mit der Wandung (3) des Bohrlochs über über die gesamte Kontaktfläche der Platte verteilte Spitzen (39) in Berührung steht.

6. Vorrichtung nach einem der Ansprüche 4 bis 5, dadurch gekennzeichnet, daß jede Umformergruppe zwischen einem mit dem Supportglied (29a) fest verbundenen elastischen Block (35) und der Kupplungsplatte (37) angeordnet ist.

7. Vorrichtung nach Anspruch 6, dadurch gekennzeichnet, daß der elastische Block (35) zwangsweise in einer Ausnehmung (34) angeordnet ist, die in einem mit dem Supportglied fest verbundenen Zwischensupport vorgesehen ist.

8. Vorrichtung nach einem der Ansprüche 2 bis 7, dadurch gekennzeichnet, daß die elastische Einrichtung von einer Feder (42) gebildet wird, die zwischen einem mit dem Meßwerkzeug fest verbundenen Element (12) und einem Verbindungsstück (43) angeordnet ist, das an einem Stützteil (44) angelenkt ist, welches auf Rollen (26) der Rollbahn (25,27) für die Raupe gelagert ist.

9. Vorrichtung nach einem der Ansprüche 2 bis 8, dadurch gekennzeichnet, daß das Meßwerkzeug ein Gehäuse (9) aufweist, das mindestens auf der Seite offen ist, die der Wandung (3) zugewandt ist, an der die Kupplungsplatten (37) in Anlage kommen, und daß das mit dem Meßwerkzeug fest verbundene Element (12) von einer zentralen Stange, an der die elastische Einrichtung (42) gelagert ist und zwei Bandrollen (13,15) gebildet wird, über die die Raupe abrollt, wobei eine der Bandrollen (13) mit seiner am Gehäuse fixierten Achse (12) feststeht.

10. Vorrichtung nach Anspruch 9, dadurch gekennzeichnet, daß eine Einrichtung (14) zum Ausgleich der durch die Unregelmäßigkeiten der Wandung aufkommenden Spannungsschwankungen vorgesehen ist.

11. Vorrichtung nach einem der Ansprüche 1 bis 10, dadurch gekennzeichnet, daß um 120° relativ zueinander angeordnete einschiebbare Arme (19) das Meßwerkzeug (1) an der Wandung des Bohrlochs führen und abstützen.

12. Vorrichtung nach einem der Ansprüche 9 bis 11, dadurch gekennzeichnet, daß das Werkzeug (1) eine vertikale Achse (23) aufweist, die im wesentlichen durch die Stangenachse verläuft und die seitlich zur vertikalen Achse (24) des Bohrlochs versetzt ist.

13. Vorrichtung nach Anspruch 9, dadurch gekennzeichnet, daß das Gehäuse (9) in dem Bohrloch von einem Kabel (7) gezogen wird, das von der Verschiebungseinrichtung (7,8) kontinuierlich abgerollt wird.

14. Vorrichtung nach einem der Anspruch 1 bis 12, dadurch gekennzeichnet, daß eine Einrichtung (45) zur Übertragung der Umformerdaten vorgesehen ist.

15. Vorrichtung nach Anspruch 14, dadurch gekennzeichnet, daß die Datenübertragungseinrichtung eine im elastischen Block der Umformer untergebrachte Sendeeinrichtung und eine Empfangseinrichtung aufweist, die in einer im Inneren des Gehäuses angeordneten Verbindungseinheit untergebracht ist.

16. Vorrichtung nach einem der Ansprüche 2 bis 15, dadurch gekennzeichnet, daß das Meßwerkzeug (1) mehrere Raupen (16a,16b) aufweist, die jeweils mit mehreren Umformergruppen versehen sind.

17. Vorrichtung nach Anspruch 16, dadurch gekennzeichnet, daß das Meßwerkzeug (1) einen zentralen Hohlkörper (46) aufweist, der in einer Schutzhülle (47) angeordnet ist, in der die Durchgänge für vier Raupen vorgesehen sind, wobei die Raupen um den Zentralkörper (46) herum abrollen und je zwei derart einander zugeordnet sind, daß Messungen an vier im wesentlichen in vier senkrechten Richtungen gelegenen Wandabschnitten vorgenommen werden können.

18. Vorrichtung nach Anspruch 17, dadurch gekennzeichnet, daß akustische Umformer zur Sendung (55a bis 55d) und zum Empfang (56a bis 56e) vorgesehen sind, die auf zwei Raupen unterschiedlicher Länge verteilt sind und in zwei senkrechten Richtungen abrollen, wobei die Umformer zum Empfang (56a bis 56e) auf einer der Raupen angeordnet sind, während die Umformer zur Sendung (55a bis 55d) auf der anderen Raupe angeordnet sind, jedes Paar einander zugeordneter Sender um Empfänger im wesentlichen in der gleichen zur Achse des Werkzeugs senkrechten Ebene liegt und die Längendifferenz der zwei einander zugehörigen Raupen derart bestimmt ist, daß sie ein Vielfaches des Abstandes zweier aufeinanderfolgender Sender beträgt.

19. Vorrichtung nach Anspruch 17, dadurch gekennzeichnet, daß jede Raupe akustische Sender (55a bis 55d) aufweist, die sich mit den akustischen Empfängern (56a bis 56e) derart abwechseln, daß für zwei einander zugehörige Raupen und in der gleichen horizontalen Ebene gilt, daß ein Sender von der einen Raupe einem Empfänger von der anderen Raupe zugeordnet ist.

20. Vorrichtung nach einem der Ansprüche 2 bis 19, dadurch gekennzeichnet, daß jede Raupe (16,16a,16b) Supportglieder (29a) für die empfangenden Umformer aufweist, die von Geophonen gebildet werden, wobei diese Supportglieder (29a) mit keine Geophone aufweisenden Gliedern (29b) abwechseln.

**Claims**

1. Device for carrying out geophysical measurements in a drilled well, of the type comprising a measuring tool (1), at least one transducer (36) mounted on said measuring tool (1), means (7, 8) for displacing tool (1) along wall (3) of well (2), elastic bearing means (42) mounted on tool (1) and positioning the transducer (36) in the vicinity of wall (3) during each measuring phase, Characterized in that the measuring tool (1) comprises at least one endless belt (16), whereof at least one part (29) constitutes a support for transducer (36) and means (7, 8) for the continuous unwinding of endless belt (16), said unwinding means (7, 8) cooperating with retaining and immobilization means (39, 60) with respect to said wall (3), during each measuring phase, of at least said part (29) of endless belt (16) which supports transducer (36).

2. Device according to claim 1, characterized in that each endless belt is a constant length caterpillar (16) constituted by separate members (29a. 29b) which are articulated with respect to one another, said caterpillar (16) moving along an internal roller and guide path (25, 27).

3. Device according to claim 2, characterized in that it comprises several acoustic transducers (36) distributed along the entire length of the caterpillar.

4. Device according to claim 3, characterized in that the transducers (36) are brought into groups, each constituted by three transducers arranged in three perpendicular directions.

5. Device according to claim 4, characterized in that each group of transducers is mounted at the rear of the retaining and immobilization means constituted by at least one fastening plate (37), whose outer face (38) is in contact with the facing well wall, by means of barbs (39) distributed over the entire contact surface of said plate (37).

6. Device according to one of the claims 4 and 5, characterized in that each group of transducers is interposed between an elastic block (35) integral with support member (29a) and the fastening plate (37).

7. Device according to claim 6, characterized in that elastic block (35) is force fitted into a recess (34) made in an intermediate support member (33) integral with the support member.

8. Device according to one of the claims 2 to 7, characterized in that the elastic means are constituted by a spring (42) mounted between a substantially fixed element ((12) of the measuring tool and a connecting piece (43) articulated on a bearing member (44) able to bear on rollers (26) of the roller path (25, 27) of the caterpillar.

9. Device according to one of the claims 2 to 8, characterized in that the measuring tool comprises a casing (9) open on at least the face positioned facing the side of the wall (3) to which are applied the fastening plates (37) and in that the substantially fixed element of the tool is constituted by a central rod (11), on which bear said elastic means (42), and two drums (13, 15) on which is unwound the caterpillar, one of said drums (13) being integral with the casing by its fixed spindle (12).

10. Device according to claim 9, characterized in that it comprises means (14) for compensating caterpillar tension variations introduced by irregularities of the wall.

11. Device according to one of the claims 1 to 10, characterized in that it comprises retractable arms (19) for the guidance and bearing of tool (1) on wall (3) of the drilled shaft, said arms (19) being disposed at 120° of one another.

12. Device according to one of the claims 9 to 11, characterized in that tool (1) has a vertical spindle (23) passing substantially through the axis of the rod and which is laterally displaced with respect to the vertical axis (24) of the drilled well.

13. Device according to claim 9, characterized in that the casing (9) is hauled into the well by a cable (7), which is continuously wound by the displacement means.

14. Device according to one of the claims 1 to 12, characterized in that it comprises means (45) for transmitting data available on the transducers.

15. Device according to claim 14, characterized in that the data transmission means (45) comprise emission means located in the elastic block of the transducers and reception means located in a connection box (22) mounted within the casing.

16. Device according to one of the claims 2 to 15, characterized in that the measuring tool (1) comprises several caterpillars (16a, 16b), each of which is provided with several groups of transducers.

17. Device according to claim 16, characterized in that the measuring tool (1) comprises a hollow central body (46) disposed in a protective envelope (47), in which there are passages (48, 49) for four caterpillars, which are unwound round said central body (46) and are associated pairwise, so as to permit measurements on four wall portions located substantially in four perpendicular directions.

18. Device according to claim 17, characterized in that it comprises emitting (55a to 55d) and receiving (56a to 56e) acoustic transducers distributed over two caterpillars of different lengths and unwinding in two perpendicular directions, the receiving transducers (56a to 56e) being mounted on one of said caterpillars, whilst the transmitting transducers (55a to 55d) are mounted on the other caterpillar, each transmitter/receiver pair being substantially located in the same plane perpendicular to the tool axis, the length difference of the two associated caterpillars being such that it is a multiple of the distance separating two consecutive transmitters.

19. Device according to claim 17, characterized in that each caterpillar comprises acoustic transmitters (55a to 55d) alternating with acoustic receivers (56a to 56e) and in such a way that for two associated caterpillars in the same horizontal plane, one transmitter of one of said caterpillars corresponds with one receiver of the other caterpillar.

20. Device according to one of the claim 2 to 19, characterized in that each caterpillar (16, 16a, 16b) has support members (29a) for the receiving transducers constituted by geophones (36), said support members (29) alternating with members (29b) not having geophones.

Fig. 1

Fig. 9

Fig. 2

0 156 660

Fig. 10

Fig. 3

3

Fig. 7

Fig. 6

Fig. 4

Fig. 5

Fig. 8